# EUROPÄISCHE PATENTANMELDUNG

(11) **EP 1 923 686 A2**
(43) Veröffentlichungstag der Anmeldung: **21.05.2008**
(21) Anmeldenummer: 07450125.5
(22) Anmeldetag: 17.07.2007
(51) Int. Cl.: G01N 1/06, G01N 1/28, B23Q 15/08, B23C 5/00, B24B 7/00, B01L 9/00

(54) **Vorrichtung zum Bearbeiten einer Probe**

(30) Priorität: 17.11.2006 DE 102006054617
(71) Anmelder: Leica Mikrosysteme GmbH, 1170 Wien (AT)
(72) Erfinder: Ranner, Robert, 1110 Wien (AT)
(74) Vertreter: Patentanwaltskanzlei Matschnig

(57) **Zusammenfassung**

Vorrichtung (1) zum Bearbeiten von Proben (15) mit einer Beobachtungseinrichtung (2) zum Beobachten einer Probe (15), einer Probenhalterung (3) zur Aufnahme der zu bearbeitenden Probe (15) und einer Werkzeughalterung (6), wobei die Werkzeughalterung (6) zur Aufnahme von Werkzeugen (5) für unterschiedliche Bearbeitungsschritte geeignet ist.

## Beschreibung

Die Erfindung betrifft eine Vorrichtung zum Bearbeiten von Proben, mit einer Beobachtungseinrichtung zum Beobachten einer Probe, einer Probenhalterung zur Aufnahme der zu bearbeitenden Probe und einer Werkzeughalterung.

Derartige Vorrichtungen werden für die Vorbereitung von Proben insbesondere für die Herstellung von Mikrotomschnitten hergestellt. Hierfür werden beispielsweise zu untersuchende Gewebeproben in Kunstharz eingegossen und diese Proben mittels Fräser in Form von Pyramidenstümpfen bearbeitet. Diese zugetrimmten Proben werden danach in einem Mikrotom geschnitten, wodurch Gewebeschnitte mit einer Dicke im Mikrometer- oder Nanometerbereich erhalten werden, die danach untersucht werden können.

Die Anmelderin hat ein für derartige Aufgaben geeignetes und bereits auf dem Markt befindliches Gerät entwickelt. Zusätzlich weist es eine Beobachtungseinrichtung auf, mit welcher auch während der Bearbeitung die Probe beobachtet werden kann.

Diese Geräte sind jedoch nicht für Proben aus härterem Material geeignet. So ist Fräsen für Halbleitermaterialien, wie z.B.: Silizium, Galliumarsenid und ähnliches, keine geeignete Bearbeitungsmethode.

Es ist daher Aufgabe der Erfindung eine Vorrichtung der eingangs erwähnten Art zu schaffen, die für das Bearbeiten einer Vielzahl von unterschiedlichen Materialien geeignet ist.

Diese Aufgabe wird erfindungsgemäß dadurch gelöst, dass die Werkzeughalterung der Vorrichtung zur Aufnahme von Werkzeugen für unterschiedliche Bearbeitungsschritte angelegt ist und eine angetriebene Drehung eines eingespannten Werkzeuges um eine Längsachse der Werkzeughalterung gestattet. Dadurch wird das Bearbeiten von unterschiedlichen Materialien, insbesondere von Proben, die aus unterschiedlichen Materialien, wie beispielsweise Metallen, Kunststoffe und Halbleitermaterialien bestehen, möglich.

Besonders vorteilhaft zur Bearbeitung derartiger Proben ist es, wenn das in die Werkzeughalterung einsetzbare Werkzeug ein Fräser, eine Säge oder eine Schleif- oder Polierscheibe ist.

Die verschiedenen Werkzeuge benötigen unterschiedliche Antriebsgeschwindigkeiten, angepasst an die Beschaffenheit der jeweiligen Probe. Daher ist in einer bevorzugten Ausführung der erfindungsgemäßen Vorrichtung die Drehgeschwindigkeit des in der Werkzeughalterung eingespannten Werkzeugs in einem Bereich von 300 bis 20.000 Umdrehungen pro Minute einstellbar.

Vorteilhafterweise steht die Werkzeughalterung mit einer Spindel in Verbindung, die die Drehbewegung der Werkzeughalterung um deren Längsachse antreibt.

Besonders einfach und rasch durchführbar ist der Austausch der Werkzeuge, wenn die Werkzeughalterung als Spannvorrichtung ausgeführt ist.

Um die Probe, insbesondere deren Kanten, in der Probenhalterung genau betrachten und gegebenenfalls vermessen zu können, ist die Probenhalterung um ihre Längsachse verdrehbar. Die Probenhalterung hat in einer bevorzugten Ausführung eine in Wesentlichem zylindrische oder konische Form. Ein wesentlicher Vorteil der erfindungsgemäßen Vorrichtung ist, dass die Probe sowohl zum Vermessen, beispielsweise zur Ermittlung der notwendigen Bearbeitungstiefe, als auch beim Auswechseln der Bearbeitungswerkzeuge in der Probenhalterung verbleibt. Dadurch bleibt die Probe unverändert in ihrer Position in Bezug auf die Probenhalterung und reproduzierbare Ergebnisse beim Bearbeiten der Probe sind gewährleistet.

In einer bevorzugten Ausführung der Erfindung ist die Probenhalterung um eine Schwenkachse verschwenkbar. Während der Bearbeitung der Probe ist die Probenhalterung in eine Position verschwenkt, in der die Längsachsen der Probenhalterung und der Werkzeughalterung im Wesentlichen parallel zueinander angeordnet sind. Weist in einer weiteren Variante der Erfindung die Beobachtungseinrichtung eine Messeinrichtung zum Vermessen der Probe auf, so ist die Probenhalterung in eine Position verschwenkbar, die bevorzugterweise etwa 20° oberhalb der Bearbeitungsposition liegt, um ein genaues Vermessen der Probenkante zu ermöglichen.

Insbesondere beim Sägen ist es notwendig, dass die Werkzeughalterung entlang einer Richtung normal auf ihre Längsachse verschwenkbar ist. Dieser Vorschub, zumeist in Mikrometerschritten, erlaubt ein kontrolliertes Durchsägen der Probe, wodurch die gewünschte Oberflächenqualität der Probe erzielt wird.

Um eine optimale Oberflächenqualität der Probe zu erreichen, kann des Weiteren vorgesehen sein, dass die Vorrichtung zusätzlich ein Pumpsystem und ein Dosierrohr aufweist, das zur Kühlung und/oder Schmierung der Probe während der Bearbeitung dient. Damit wird ein Überhitzen des Werkzeugs und/oder Probe während der Bearbeitung vermieden.

Im Folgenden wird die Erfindung anhand eines nicht-einschränkenden Ausführungsbeispiels mit zugehörigen Figuren näher erläutert. Darin zeigen
Fig. 1 eine Ansicht der Vorrichtung schräg von hinten rechts oben,
Fig. 2 eine Seitenansicht der Vorrichtung der Fig. 1,
Fig. 3 eine Ansicht der Vorrichtung der Fig. 1 von vorne links oben,
Fig. 4 eine vergrößerte Detailansicht der Vorrichtung der Fig.1 im Bereich der Spannvorrichtung und der Probenaufnahme mit einem Fräser,
Fig. 5 eine der Fig. 3 entsprechenden Ansicht mit einer Sägetrennscheibe
Fig. 6 eine der Fig. 3 entsprechenden Ansicht mit einer Polierscheibe
Fig. 7 eine der Fig. 4 entsprechenden Ansicht mit einer Vorrichtung zum Schmieren während des Sägevorgangs und
Fig. 8 und 9 je eine Ansicht der Vorrichtung gemäß Fig. 2 mit abgenommenem Gehäuse mit unterschiedlichen Stellungen der Kurvenscheibe.

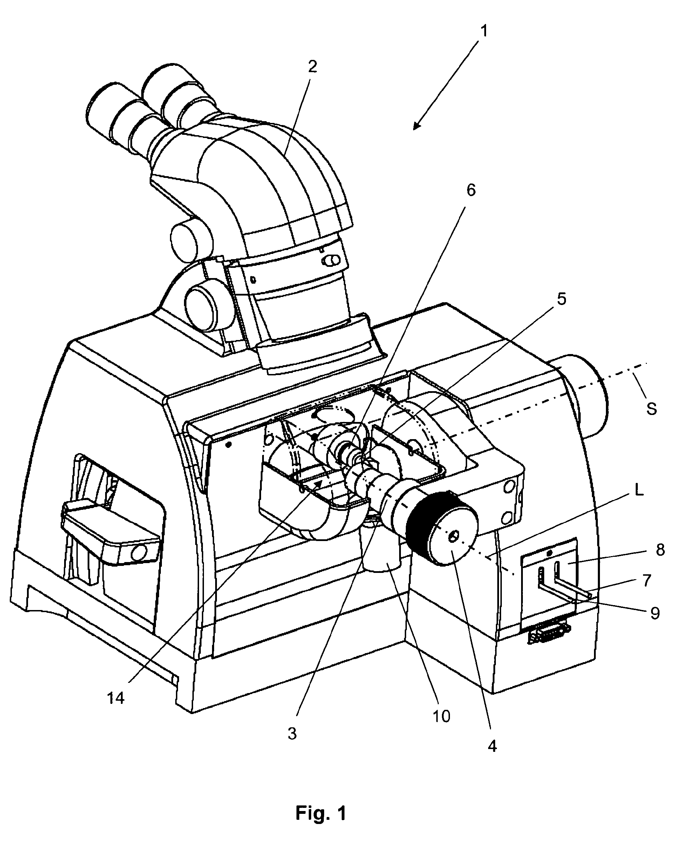

In Fig. 1 ist eine erste Ansicht der Vorrichtung 1 dargestellt. Die Vorrichtung 1 weist eine Beobachtungseinrichtung 2 auf, beispielsweise ein Stereomikroskop, das zur Betrachtung eines zu bearbeitenden Präparates, im Folgenden "Probe" genannt, dient. Gegebenenfalls kann eine Messeinrichtung in der Beobachtungseinrichtung vorgesehen sein, die ein Vermessen der Probe ermöglicht. So ist zum Beispiel in einer bevorzugten Variante der Erfindung ein Messokular in dem Stereomikroskops eingesetzt, mit dem die Probe selbst, aber auch der Bearbeitungsfortschritt genau vermessen werden können. Als Beobachtungseinrichtung 2 können auch andere Systeme, wie beispielsweise Videokameras und ähnliches zum Einsatz kommen.

Die Vorrichtung 1 ist mit einer Probehalterung 3 ausgestattet, in die die zu bearbeitende Probe eingesetzt wird. Bei der Probe handelt es sich vorzugsweise um Material mit hoher Härte, beispielsweise Halbleitermaterialien wie Silizium, Galliumarsenid usw. Die Vorrichtung ist aber ebenso geeignet, biologisches Material, das günstigerweise in ein Kunstharz eingebettet wurde, zu bearbeiten.

Die im Wesentlichen konisch-längliche Probenhalterung 3 besitzt ein Mittel zum Verdrehen der Probe um die Längsachse L der Probenhalterung 3. Mittels eines Drehknopfes 4 kann die Probe derart gedreht werden, dass alle Bereiche der Probe durch das Stereomikroskop 2 betrachtet und/ oder Kanten der Probe bearbeitet werden können.

Das Werkzeug 5, beispielsweise ein Fräser, wird in eine Werkzeughalterung, vorzugsweise in eine Spannvorrichtung 6 eingesetzt. Die Spannvorrichtung 6 wird in einer bevorzugten Ausführung der Erfindung mittels einer Spindel angetrieben. Die Drehzahl der Spindel ist beispielsweise über einen Bereich von 300 bis 20.000 Umdrehungen pro Minute einstellbar. Der für die Bearbeitung der Probe geeignete Drehzahlbereich ist abhängig von der Art des Probenmaterials, insbesondere von seiner Härte. So sind für gewöhnlich Drehzahlen von etwa 20.000 U/min für das Fräsen erforderlich, während beim Sägen oder Polieren Drehzahlen von 300 - 500 U/min häufig nicht überschritten werden sollen, um eine Beschädigung der Probe zu vermeiden und die gewünschte Oberflächenqualität zu erzielen.

Um die Probe während der Bearbeitung kühlen oder schmieren zu können, ist ein System vorgesehen, wobei über einen ersten Zulauf 7 ein Kühl- oder Schmiermittel (aus einem Vorratsbehälter, nicht dargestellt) einer Pumpe 8 zugeführt und über einen zweiten Zulauf 9 von der Pumpe 8 zu der Probe gefördert wird. Des Weiteren ist bevorzugterweise eine Absaugung 10 im Bereich des Werkzeuges bzw. Probe vorgesehen, um das während der Bearbeitung abgetragene Material sowie Kühl- oder Schmiermittel von der Probenoberfläche und dem Werkzeug 5 zu entfernen.

In einer bevorzugten Variante der Erfindung ist die Probenhalterung 3 um eine Schwenkachse S verschwenkbar. Diese Verschwenkbarkeit der Probenhalterung 3 erlaubt es, die Probe in eine Vermessungs-, in eine Bearbeitungsposition oder in eine Kontrollposition zu bringen. In Fig. 1 ist die Bearbeitungsposition dargestellt. Hierbei liegen die Längsachsen der Probenhalterung 3 und der Spannvorrichtung 6 im Wesentlichen parallel zueinander.

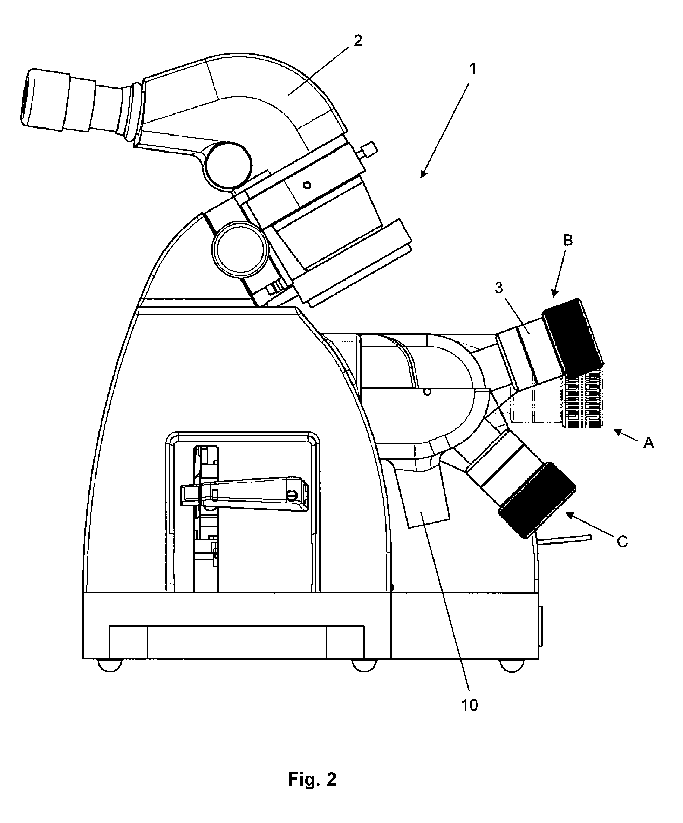

In Fig. 2 sind die drei für gewöhnlich gewählten Positionen der Probenhalterung 3 dargestellt. Die in Fig. 1 dargestellte Bearbeitungsposition A ist in dieser Darstellung strichpunktiert dargestellt. In einer Vermessungsposition B, die sich etwa 20° oberhalb der Bearbeitungsposition A befindet, ist mit geeigneten Messvorrichtungen in der Beobachtungseinrichtung 2 ein genaues Vermessen beispielsweise der Probenkanten möglich. Soll beispielsweise in einer Probe eine Phasengrenze zur Defektanalyse herauspräpariert werden, so wird zum Beispiel zunächst ein kleiner Bereich der Probe abgefräst und danach durch Schwenken der Probe in die Vermessungsposition B beispielsweise mittels Messeinrichtung im Okular des Mikroskops 2 der erforderliche Materialabtrag bestimmt. Anschließend wird die Probe durch Schwenken wieder in die Bearbeitungsposition A gebracht und die Probe in der so festgestellten Weise bearbeitet. Auch während des Bearbeitens ist eine Beobachtung der Probe durch das Mikroskop 2 möglich, ohne jedoch genaue Vermessungen durchführen zu können.

In einer dritten Position, der Kontrollposition C ist die Probenhalterung 3 etwa 45° von der Bearbeitungsposition A abwärts geschwenkt. Hier befindet sich die Probenoberfläche genau im Strahlengang des Stereomikroskops 2. In dieser Position C wird beispielsweise überprüft, ob die Oberflächenqualität der bearbeiteten Probe ausreichend ist. Ebenso ist eine Analyse der Probenoberfläche mittels geeigneten Detektoren, beispielsweise Infrarot- oder Fluoreszenzdetektoren denkbar. Voraussetzung hierfür sind geeignete Anregungsquellen in der Beobachtungseinrichtung 2.

Aufgrund dieser Beobachtungsmöglichkeit ist der Fortschritt der Probenbearbeitung jederzeit während der Bearbeitung überprüfbar, ohne dass die Bearbeitung unterbrochen und die Probe aus der Probenhalterung 3 entnommen werden muss.

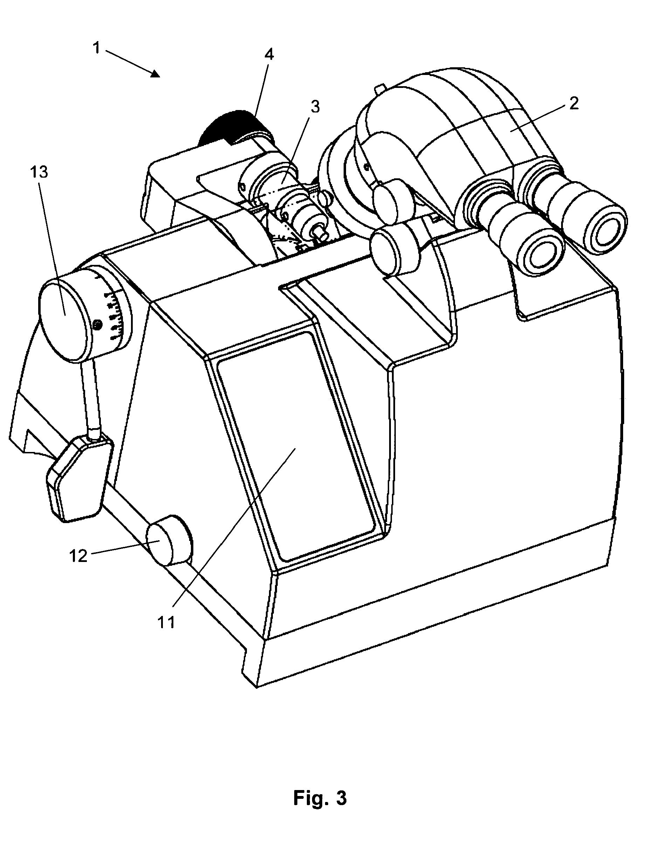

In Fig. 3 ist eine Vorderansicht der Vorrichtung 1 dargestellt; von dieser Seite aus kann der Benutzer die Probe durch das Stereomikroskop 2 betrachten und über ein Eingabefeld 11, das beispielsweise als Tastenfeld mit Anzeige oder Touchscreen ausgeführt ist, sämtliche Parameter für die Bearbeitung der Probe, wie beispielsweise die Drehzahl des Werkzeugs 5 festlegen. Der Vorschub des Werkzeugs 5 wird in der dargestellten Ausführung der Erfindung über einen Drehknopf 12 eingestellt. In einer anderen Variante der Erfindung wird der Vorschub ebenfalls über das Eingabefeld 11 festgelegt.

Über ein Stellrad 13 wird die Probenhalterung 3 geschwenkt, um die Probe, wie bereits oben erwähnt, in die Vermessungsposition B oder in die primäre Bearbeitungsposition A zu bringen (Fig. 2). Die primäre Bearbeitungsposition A ist jene Position, in der für gewöhnlich die Probe bearbeitet wird und bei der die Längsachse der Probenhalterung 3 und die Längsachse der Spannvorrichtung 6 parallel zueinander ausgerichtet sind. Ebenso kann die Probenhalterung 3 in eine Position gebracht werden, die zwischen der Kontrollposition B und der primären Bearbeitungsposition A liegt. In diesem Fall ist die Längsachse der Probenhalterung 3 zu der Längsachse der Spannvorrichtung 6 geneigt. Somit ist es möglich, die Kanten der Probe unter einem Winkel zu bearbeiten, der jenem des Neigungswinkels, den die Längsachsen von Probenhalterung 3 und Spannvorrichtung 6 einschließen, entspricht.

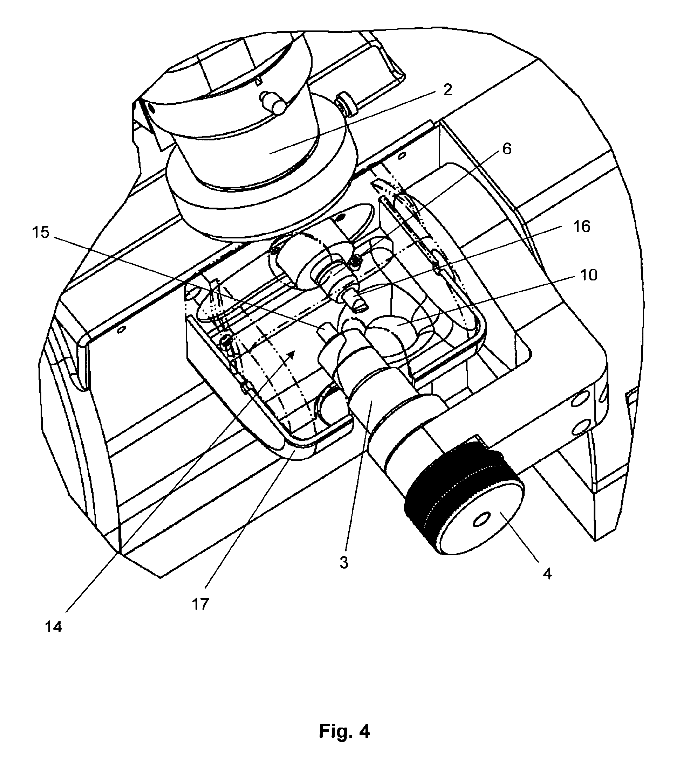

Eine vergrößerte Ansicht des Bearbeitungsbereichs 14 der Vorrichtung 1 ist in Fig. 4 gezeigt. Eine Probe 15 ist auf der mittels Drehknopf 4 verdrehbaren Probenhalterung 3 angebracht. Im dargestellten Fall ist ein Fräser 16 in der Spanneinrichtung 6 eingespannt. Um eine Verunreinigung der Umgebung und der Vorrichtung 1 während der Bearbeitung der Probe zu vermeiden, befindet sich der Bearbeitungsbereich 14 in einem zumindest teilweise transparenten Gehäuse 17, das eine Absaugöffnung 10 aufweist, über die das während der Bearbeitung der Probe 15 abgetragene Material entfernt wird. Dadurch wird auch die Verunreinigung der Optik des Stereomikroskops 2 vermieden und eine Beobachtung der Probe 15 während der Bearbeitung ermöglicht.

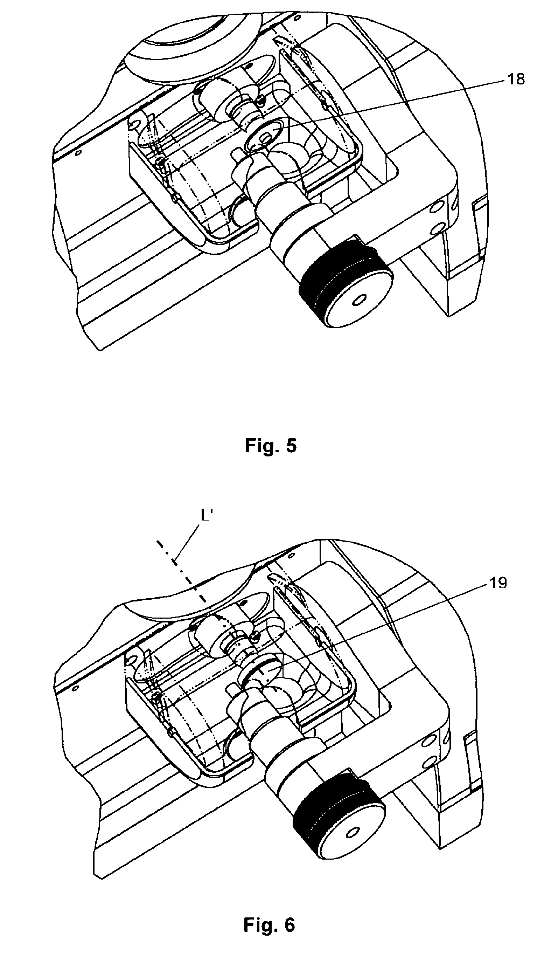

Fig. 5 zeigt ebenfalls den Bearbeitungsbereich 14, wobei der Fräser 16 aus Fig. 4 durch eine Sägescheibe 18 ersetzt ist. Diese Sägescheibe ist beispielsweise eine Diamantsäge, wodurch ein Sägen von besonders harten Materialien wie Halbleitermaterialien möglich ist.

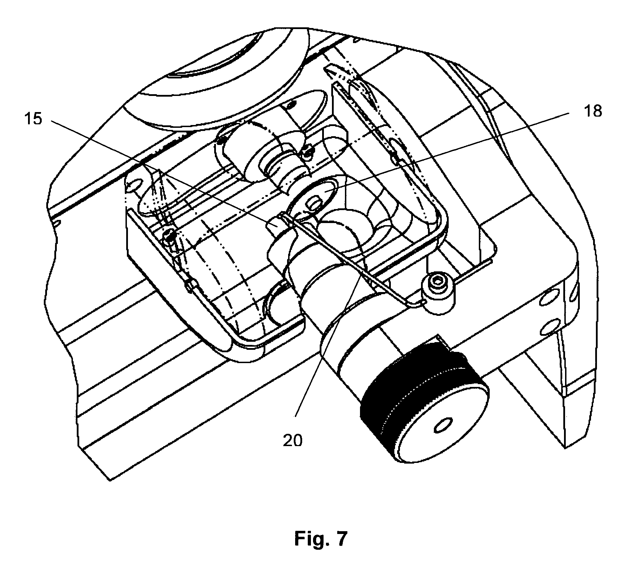

In Fig. 6 ist anstatt der Sägescheibe 18 aus Fig. 5 eine Schleif- oder Polierscheibe 19 in der Spannvorrichtung der Spannvorrichtung 6 eingesetzt.

Da beim Bearbeiten der Probe, insbesondere bei höheren Drehzahlen der Spindel höhere Temperaturen entstehen, die die Probenoberfläche beeinträchtigen oder im schlimmsten Fall die Probe zerstören können, ist bei einer bevorzugten Ausführung der Erfindung ein System für die Zufuhr von Kühl- und/oder Schmiermittel vorgesehen. Fig. 7 zeigt wiederum den Bearbeitungsbereich 14, wobei die Säge 18 in der Spannvorrichtung 6 befestigt ist. Ein Dosierrohr 20, das mit dem Zulauf 9 der Pumpe 8 aus Fig. 1 in Verbindung steht, führt das Kühl- oder Schmiermittel zu, wobei es direkt auf die Probe 15 aufgebracht wird.

Ebenso kann ein derartiges Zufuhrsystem beim Fräsen oder Polieren benötigt werden; so werden beim Polieren der Probenoberfläche zumeist Poliermittel eingesetzt, die ebenfalls über das Dosierrohr 20 auf die Probenoberfläche aufgebracht werden.

Soll beispielsweise in einem Halbleiter eine Phasengrenze zur Feststellung von Defekten untersucht werden, wird zunächst die Probe 15 in die Probenhalterung 3 eingesetzt. Mittels Drehknopf 4 wird die Probe 15 in der Probenhalterung 3 in die für die Bearbeitung vorgesehen Position gebracht. Nach dem Einsetzen beispielsweise der Säge 18, wird die Probe zunächst mit Hilfe des verschwenkbaren Probenhalters 3 in die Vermessungsposition B, die eine Beobachtung der Probenkante ermöglicht, gebracht. Nun kann mittels des Beobachtungssystems 2, beispielsweise der Messeinrichtung in dem Stereomikroskop der notwendige Materialabtrag bestimmt werden, um die gesuchte Phasengrenze herauspräparieren zu können. Danach wird die Probenhalterung 3 in die Bearbeitungsposition A geschwenkt und mit der Bearbeitung, zum Beispielen Sägen kann begonnen werden.

Ein wesentlicher Vorteil der erfindungsgemäßen Vorrichtung 1 ist, dass die Probe 15 sowohl zum Vermessen, beispielsweise zur Ermittlung der notwendigen Bearbeitungstiefe, als auch beim Auswechseln der Bearbeitungswerkzeuge, wie Fräser 16, Säge 18 oder Polierscheibe 19 in der Probenhalterung 3 verbleibt. Dadurch bleibt die Probe 15 unverändert in ihrer Position in Bezug auf die Probenhalterung 3, und reproduzierbare Ergebnisse beim Bearbeiten der Probe 15 sind gewährleistet. Im Gegensatz dazu hat ein Entfernen der Probe 15 - zum Beispiel zum Vermessen in einer separaten Beobachtungseinrichtung - und nachfolgendem Wiedereinsetzen der Probe 15 in die Probenhalterung 3 häufig eine Abweichung hinsichtlich der ursprünglichen Position der Probe 15 in der Probenhalterung 3 zur Folge, wodurch mit erhöhtem Aufwand eine neuerliche Adjustierung der Probe 15 in der Probenhalterung 3 durchgeführt werden muss. Insbesondere beim Arbeiten im Mikrometerbereich, wie im vorliegenden Beispiel, kann eine Verschiebung der Probenposition dazu führen, dass zuviel Material abgetragen und somit die gesuchte Phasengrenze bei der Präparation verfehlt wird. Die Ergebnisse in der Bearbeitung fallen daher aufgrund der Positionsabweichung nach dem Entnehmen und neuerlichen Einsetzen der Probe 15 in die Probenhalterung 3 nicht zufrieden stellend aus. Dasselbe Problem tritt auf, wenn bei dem Auswechseln der Werkzeuge ebenfalls die Probe 15 aus der Probenhalterung 3 entfernt werden muss.

Durch die Erfindung ist ein Entnehmen der Probe überflüssig und eine hohe Genauigkeit und Reproduzierbarkeit sind gewährleistet.

Beim Sägen der Probe 15 wird ein Großteil des die Phasengrenze verdeckenden Materials entfernt. Hierbei wird die Spannvorrichtung 6 in einer Richtung normal zu der Drehachse des Werkzeughalters 6 gemäß dem festgelegten Vorschub bewegt und die Säge 18 auf diese Weise durch die Probe 15 geführt. Je nach Materialbeschaffenheit der Probe 15 wird über die Pumpe 8 und dem Dosierrohr 20 Kühlmittel an die Probenoberfläche im Bereich des Sägeschnittes gebracht, um eine Überhitzung der Probe 15 und/oder der Säge 18 zu vermeiden. Während des Sägevorgangs kann die Probe 15 jederzeit durch das Stereomikroskop 2 beobachtet werden. Das bei dem Sägen anfallende Material wird, gegebenenfalls gemeinsam mit dem Kühl- oder Schmiermittel, kontinuierlich abgesaugt, um eine Verunreinigung des Bearbeitungsraums 14 und insbesondere der Probe 15 zu reduzieren.

Vor dem Auswechseln des Werkzeuges kann in der erfindungsgemäßen Vorrichtung 1 die Probe 15 zunächst in die Kontrollposition C verschwenkt und die Oberfläche der Probe 15 überprüft werden. Ist keine Überprüfung der Probe 15 notwendig, verbleibt die Probenhalterung 3 in der Bearbeitungsposition A. Danach wird das Werkzeug - hier die Säge 18 - aus der Spannvorrichtung 6 genommen und durch die Polierscheibe 19 ersetzt. Hierbei wird die bereits abgetragene Probentiefe von einer Steuereinheit der Vorrichtung 1 gespeichert. Zum Wechseln des Werkzeugs 5 wird die Spindel 21 meist in der Längsachse verschoben, weil Werkzeuge 5 für gewöhnlich eine unterschiedliche Geometrie aufweisen. Danach wird die Polierscheibe 19 vorsichtig bis zur Berührung an die Probe 15 in der Längsachse L' verschoben und anschließend die weitere Bearbeitung gestartet. Mithilfe dieses Werkzeuges wird die zuvor gesägte Oberfläche der Probe 15 poliert. Der bei Polieren notwendige Vorschub wird ebenfalls von der Steuereinheit zum bereits während des Sägens abgetragenen, in der Steuereinheit gespeicherten Wert dazugezählt. Somit ist nach Abschluss des Bearbeitens der Probe 15 der Gesamtabtrag der Probe 15 auslesbar. Die derart präparierte Probe 15 kann nun beispielsweise auf Defekte hin untersucht werden.

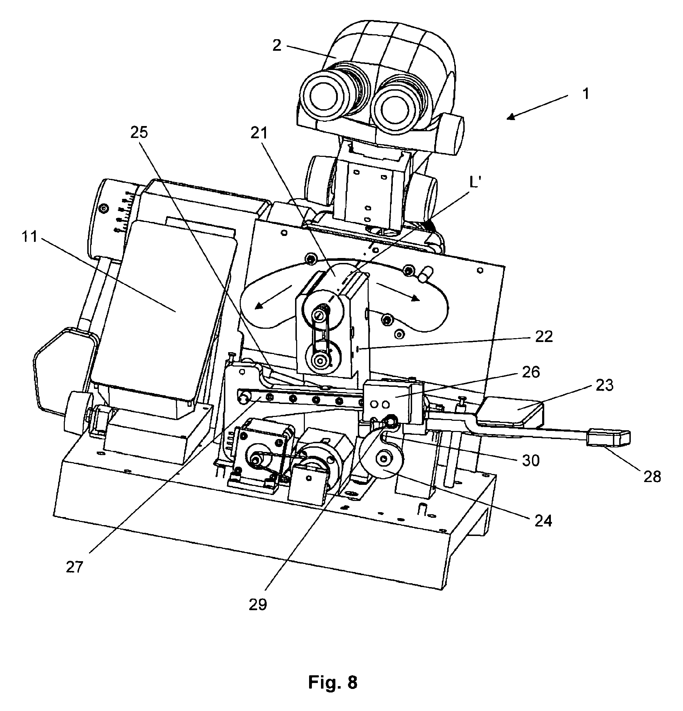

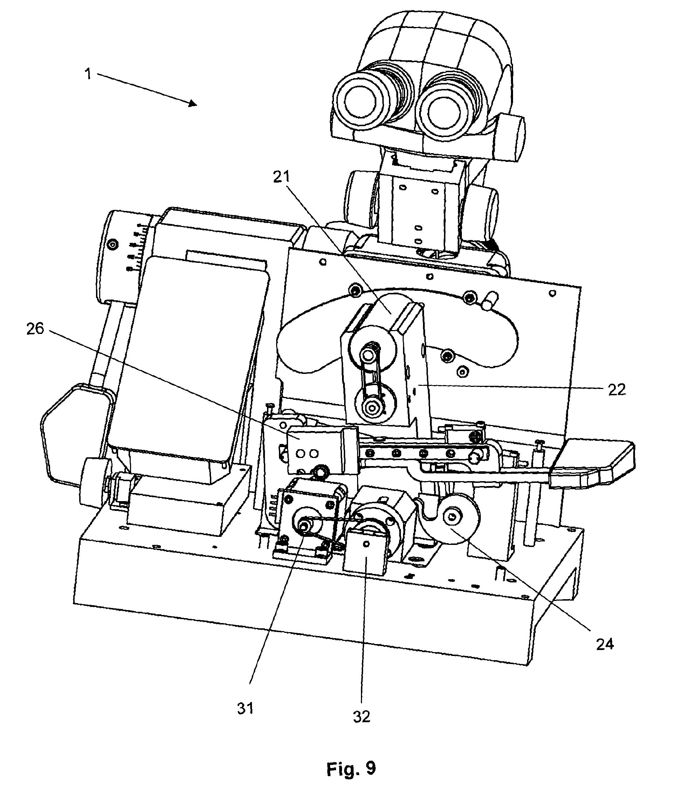

Fig. 8 und 9 zeigen eine Vorderansicht der Vorrichtung 1 mit entferntem Gehäuse. Die Drehbewegung der Spannvorrichtung 6 wird über eine Spindel 21 realisiert. Die Spindel 21 steht mit einem Schwenkarm 22 in Verbindung, wobei der Schwenkarm 22 eine Schwenkbewegung (durch Pfeile dargestellt) in einer normal zu der Drehachse der Spindel 21 verlaufenden Richtung ausführt.

Beim Sägen von Proben aus hartem Material, insbesondere bei Proben aus verschiedenen Materialien mit unterschiedlichen Härten ist ein gleichmäßiger, kontrollierter Vorschub des Sägeblattes von besonders hoher Bedeutung. Zweckmäßiger Weise werden zur Einstellung des Vorschubs Gewichte aufgelegt; dies allein ergibt allerdings keinen gleichmäßigen Vorschub, weil beispielsweise sich die Reibungsfläche von Sägeblatt und Probe mit dem Sägefortschritt bei Proben mit rundem Querschnitt oder sich der Sägewiderstand aufgrund verschiedener Härten der unterschiedlichen Materialien innerhalb der Probe ändert. Bei sehr geringen Vorschüben (< 0,05mm/ s) tritt häufig aufgrund des geringen Auflagegewichts und der durch verschiedene Materialien bedingten unterschiedlichen Reibung zwischen Sägeblatt und Probe ein Stillstand des Sägeblattes auf. Ebenso verursachen die unterschiedlichen Materialeigenschaften bei höheren Gewichtsauflagen unregelmäßige Schnittgeschwindigkeiten, die wiederum die Oberflächenqualität des Schnittes beeinträchtigen. Des Weiteren ist die Einstellung unterschiedlicher Schnittgeschwindigkeiten nur durch die Auflage unterschiedlicher Gewichte zu realisieren. Eine andere Möglichkeit zur Einstellung des Vorschubs bzw. der Schnittgeschwindigkeit ist der Einsatz einer Zwangsführung. Auch hier treten häufig Probleme bei zu hohem Vorschub oder stumpfer Säge auf, die im schlimmsten Fall zum Bruch des Sägeblattes und/ oder der Probe führen.

In der gezeigten Vorrichtung ist zur Einstellung einer gleichmäßigen Schnittgeschwindigkeit der Säge 18 eine Kombination von Zwangsführung und Gewichtsauflage realisiert. Der Schwenkarm 22 - und damit das Werkzeug in der Spannvorrichtung 6 - ist über einen Hebel 23 in einer Richtung normal zu der Längsachse L' der Spindel 21 bewegbar. Diese Schwenkbewegung des Schwenkarms 22 definiert die Schnittgeschwindigkeit der Säge 18 und wird in einer bevorzugten Ausführung der Erfindung über einen Schrittmotor gesteuert, wobei der Vorschub insbesondere im Mikrometerbereich einstellbar ist.

Der Antrieb, beispielsweise der Schrittmotor, ist über eine Kurvenscheibe 24 mit dem Hebel 23 verbunden. Der Schwenkarm 22 wiederum steht mit dem Hebel 23 über eine Gelenksstange 25 in Verbindung (Zwangsführung des Schwenkarmes 22). Der Hebel 23 ist zusätzlich mit einem Gewicht 26 beaufschlagt, wobei das Gewicht 26 auf einer mit dem Hebel 23 in Verbindung stehenden Führung 27 ruht. Je nach Lage des Gewichts 26 verändert sich die Krafteinwirkung des Gewichts 26 auf den Hebel 23 und damit auf den Schwenkarm 22. Die Gewichtseinwirkung ist am größten, wenn das Gewicht 26 durch Bewegen eines Schiebers 28 auf das äußere Ende der Führung 27 positioniert wird.

Die Kurvenscheibe 24 steht über einen Zapfen oder, wie in der gezeigten Ausführung, über ein Kugellager 29 mit dem Gewicht 26 in Kontakt. Ein Kugellager 29 ist aufgrund geringerer Reibungskräfte besonders geeignet. Die mit dem Schrittmotor verbundene Kurvenscheibe 24 dreht sich in der gezeigten Ausführung der Vorrichtung 1 im Uhrzeigersinn. Die Drehung der Kurvenscheibe 24 bewirkt aufgrund des sich verringernden Radius der Kurvenscheibe 24 ein Absenken des Gewichtes 26 und damit des Hebels 23 in der von dem Antrieb vorgegebenen Geschwindigkeit. Dadurch bewegt sich der Schwenkarm 22 in der Fig. 8 nach rechts. Hat die Kurvenscheibe 24 eine beinahe vollständige Umdrehung um ihre eigene Achse vollführt, gelangt das Kugellager 29 in eine Einbuchtung 30 der Kurvenscheibe 24; damit ist der Endpunkt der Bewegung erreicht und die Probe 15 ist durchgesägt. Der Schwenkarm 22 wird daraufhin wieder in seine Ausgangsposition (in Fig. 8 nach links) verschwenkt.

Bleibt die Sägescheibe 18 beispielsweise in der Probe stecken, so kann sich der Schwenkarm 22 nicht weiter bewegen und konsequenterweise verbleibt der Hebel 23 in der gegenwärtigen Position. Die Kurvenscheibe 24 dreht sich weiter und verliert aufgrund ihres sich verringernden Radius den Kontakt zu dem Gewicht 26. Dadurch wird die Zwangsführung des Schwenkarmes 22 unterbrochen und lediglich das Gewicht 26, mit dem der Schwenkarm 22 beaufschlagt ist, wirkt auf die Probe 15. Auf diese Weise wird eine Zerstörung der Probe 15 und/oder des Sägeblattes 18 durch Zugkräfte aufgrund einer Zwangsführung vermieden. Nach Erreichen des Endpunktes der Kurvenscheibe 24 wird der Schwenkarm 22 wieder in seine Ausgangsposition verschwenkt und damit die stecken gebliebene Säge 18 aus der Probe 15 herausgezogen.

In einer anderen Variante der Erfindung wird der Endpunkt nicht durch das Erreichen jener Position der Kurvenscheibe 24, in der das Kugellager 29 in die Einbuchtung 30 einfährt, bestimmt, sondern durch die Vorgabe einer Anzahl von Schritten des als Antrieb fungierenden Schrittmotors. Die Anzahl der Schritte kann beispielsweise über das Eingabefeld 11 eingegeben werden.

Ist die Kurvenscheibe 24 nicht in Kontakt mit dem Gewicht 26, wie in Fig. 9 gezeigt, so ist der Schwenkarm 22 ohne Gewichtseinwirkung und ist nicht mit dem Antrieb der Kurvenscheibe 24 verbunden. Er verbleibt daher in der (manuell) vorgegebene Position. Das Werkzeug 5 dreht sich aufgrund der Bewegung der Spindel 21 ohne Vorschub. Diese gewichtslose Einstellung des Schwenkarmes 22 wird gewählt, wenn die Vorrichtung 1 zum Bearbeiten einer Probe 15 mit dem Fräser 16 oder der Schleif- oder Polierscheibe 19 eingesetzt wird.

Beim Bearbeiten der Probe 15 mit dem Fräser 16 oder beim Schleifen und Polieren ist häufig ein Vorschub des Werkzeugs 5 in Richtung parallel zu der Längsachse L' der Werkzeughalterung 6 erwünscht. Diese Bewegung wird durch eine Spindel (nicht gezeigt) in einem Antrieb 31 erzeugt, die direkt oder indirekt über eine Achse 32 auf den Schwenkarm 22 wirkt. So hat beispielsweise diese Vorschubspindel eine Steigung von 0,5 mm und wird von einem Schrittmotor mit 400 Schritten / Umdrehung angetrieben.

In einer anderen nicht dargestellten Ausführung der Erfindung ist die Zwangsführung des Schwenkarmes 22 über eine Linearführung realisiert, die mittels Gewicht auf ein Element gezogen wird, das mit einer kontrollierten Geschwindigkeit verfahrbar ist. Ebenso kann vorgesehen sein, dass die die Spannvorrichtung 6 aufweisende Spindel 21 entlang einer Geraden geführt wird und nicht, wie vorhin gezeigt, entlang eines Ausschnittes einer Kreisbahn. Außerdem kann die Kurvenscheibe 24 beispielsweise durch eine weitere Spindel ersetzt werden, deren Ende als Auflage für den Schwenkarm 22 dient.

## Patentansprüche

1. Vorrichtung (1) zum Bearbeiten von Proben (15) mit einer Beobachtungseinrichtung (2) zum Beobachten einer Probe (15), einer Probenhalterung (3) zur Aufnahme der zu bearbeitenden Probe (15) und einer Werkzeughalterung (6), **dadurch gekennzeichnet, dass** die Werkzeughalterung (6) zur Aufnahme von Werkzeugen (5) für unterschiedliche Bearbeitungsschritte angelegt ist und eine angetriebene Drehung eines eingespannten Werkzeuges (5) um eine Längsachse (L') der Werkzeughalterung (6) gestattet.

2. Vorrichtung (1) nach Anspruch 1, **dadurch gekennzeichnet, dass** die Werkzeughalterung (6) mit einer Spindel (21) in Verbindung steht, die eine Drehbewegung der Werkzeughalterung (6) um deren Längsachse (L') antreibt.

3. Vorrichtung (1) nach einem der Ansprüche 1 oder 2, **dadurch gekennzeichnet, dass** die Drehgeschwindigkeit des in der Werkzeughalterung (6) eingespannten Werkzeugs (5) in einem Bereich von 300 bis 20.000 Umdrehungen pro Minute einstellbar ist.

4. Vorrichtung (1) nach einem der Ansprüche 1 bis 3, **dadurch gekennzeichnet, dass** das in die Werkzeughalterung (6) einsetzbare Werkzeug (5) aus der Gruppe der Fräser (16), Sägen (18) und Schleif- oder Polierscheiben (19) ausgewählt ist.

5. Vorrichtung (1) nach einem der Ansprüche 1 bis 4, **dadurch gekennzeichnet, dass** die Werkzeughalterung (6) als Spannvorrichtung ausgeführt ist.

6. Vorrichtung (1) nach einem der Ansprüche 1 bis 5, **dadurch gekennzeichnet, dass** die Probenhalterung (3) mit einer Längsachse (L) um eine Schwenkachse (S) verschwenkbar ist, wobei zur Bearbeitung der Probe (15) die Probenhalterung (3) in eine Position (B) schwenkbar ist, in der die Längsachsen (L, L') der Probenhalterung (3) und der Werkzeughalterung (6) im Wesentlichen parallel zueinander angeordnet sind

7. Vorrichtung (1) nach einem der Ansprüche 1 bis 6, **dadurch gekennzeichnet, dass** die Beobachtungseinrichtung (2) eine Messeinrichtung zum Vermessen der Probe (15) aufweist.

8. Vorrichtung (1) nach einem der Ansprüche 1 bis 7, **dadurch gekennzeichnet, dass** die Probenhalterung (3) um ihre Längsachse (L) verdrehbar ist.

9. Vorrichtung (1) nach einem der Ansprüche 1 bis 8, **dadurch gekennzeichnet, dass** die Werkzeughalterung (6) entlang einer Richtung normal auf ihre Längsachse (L') verschwenkbar ist.

10. Vorrichtung (1) nach einem der Ansprüche 1 bis 9, **dadurch gekennzeichnet, dass** die Vorrichtung (1) zusätzlich ein Pumpsystem (8) und ein Dosierrohr (20) aufweist, das zur Kühlung und/oder Schmierung der Probe (15) während der Bearbeitung dient.
